(19) **Europäisches Patentamt European Patent Office Office européen des brevets**

(11) **EP 1 568 906 B1**

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(51) Int Cl.:
*F16D 21/06* (2006.01)  *F16D 25/10* (2006.01)
*F16D 25/0638* (2006.01)

(21) Anmeldenummer: **04004484.4**

(22) Anmeldetag: **27.02.2004**

(54) **Doppelkupplung**

Double clutch

Embrayage double

(84) Benannte Vertragsstaaten:
**DE FR GB IT**

(43) Veröffentlichungstag der Anmeldung:
**31.08.2005 Patentblatt 2005/35**

(73) Patentinhaber: **BorgWarner Inc.
Auburn Hills, MI 48326 (US)**

(72) Erfinder:
• **Heinrich, Johannes, Dr.
61381 Friedrichsdorf (DE)**
• **Hauck, Hans Jürgen
79137 Karlsruhe (DE)**

• **Bauer, Karl-Heinz
76676 Graben-Neudorf (DE)**

(74) Vertreter: **Patentanwälte
Westphal, Mussgnug & Partner
Am Riettor 5
78048 Villingen-Schwenningen (DE)**

(56) Entgegenhaltungen:

| | |
|---|---|
| DE-A- 10 131 816 | DE-A- 10 146 606 |
| DE-A- 19 833 378 | FR-A- 2 814 516 |
| US-A- 4 966 270 | US-A- 5 865 289 |

**Beschreibung**

Die Erfindung betrifft eine Doppelkupplung gemäß dem Oberbegriff des Patentanspruchs 1.

Doppelkupplungen für Kraftfahrzeuge werden unterschieden nach Art ihrer Reibpartner in trockene oder nasse, d.h. mittels flüssigem Kühlmedium gekühlte, Kupplungen. Ferner kann man Doppelkupplungen unterscheiden nach ihrer Anordnung. Insbesondere bei den nassen Doppelkupplungen gibt es die radial ineinander geschachtelte Bauart ("konzentrische Anordnung") und die axial hintereinander angeordneten Kupplungen ("parallele Anordnung").

Bekannt sind nasse, parallele Kupplungen, bei denen der motorseitige Antrieb über die Innenlamellenträger erfolgt und der Abtrieb über die Außenlamellenträger. Eine derartige Ausführungsform entnimmt man beispielsweise der EP 1 195 537 B1.

Diese Bauart weist den Nachteil auf, dass die abtriebsseitigen Drehmassen durch die großen, zylinderförmigen Außenlamellenträger relativ groß sind. Dies führt zu Nachteilen bei der Synchronisierung der einzelnen Gänge.

Ebenfalls bekannt ist ferner eine Ausführung mittels Abtrieb über Innenlamellenträger. Beispiele derartiger Doppelkupplungen sind der DE 198 33 376 A1 oder der DE 101 46 606 A1 zu entnehmen.

Bei beiden Ausführungsformen ist jedoch die hydraulische Betätigung recht kompliziert und aufwendig. Insbesondere die DE 198 33 376 A1, von der die Erfindung ausgeht, weist ein vergleichsweise kompliziertes Hebelgestänge mit einer Mehrzahl von Zugankern für die Kraftübertragung vom Ringkolben auf das Lamellenpaket auf.

Weitere Doppelkupplungen sind aus DE 198 33 378 A1, der US 4,966,270, der FR 2 814 516 A1, der DE 101 46 606 A1, der DE 101 31 816 A1 und der US 5,865,289 bekannt.

Aufgabe der Erfindung ist es, eine Doppelkupplung in paralleler Bauart insbesondere für ein Kraftfahrzeug bereitzustellen, welche sowohl einfach aufgebaut ist als auch eine einfache Synchronisierung der Gänge des Kraftfahrzeugs erlaubt und zudem einen optimierten Bauraumbedarf besitzt.

Diese Aufgabe wird durch eine Doppelkupplung mit den Merkmalen des Patentanspruchs 1 gelöst.

Vorteilhafte Ausführungen und Weiterbildungen der Erfindung sind in den Unteransprüchen angegeben.

Erfindungsgemäß ist demnach bei einer Doppelkupplung in paralleler Anordnung mit angetriebenem Außenlamellenträger anstelle eines komplizierten Hebelgestänges mit Zuganker(n) eine den Außenlamellenträger umgreifende Zughülse vorgesehen, über die eine der beiden Kupplungen betätigbar ist. Auf diese Weise werden die Vorteile des Abtriebs über die Innenlamellenträger mit kleinem Massenträgheitsmoment mit einer einfachen hydraulischen Betätigung kombiniert.

Weiterhin ist zum Betätigen der einen Kupplung ein erster über einen ersten Druckraum hydraulisch betätigbarer Betätigungskolben vorgesehen.

Zudem ist ein erster Ausgleichsraum zum Fliehkraftausgleich für den ersten Betätigungskolben vorgesehen, welcher durch eine angetriebene Kupplungsglocke und den ersten Betätigungskolben gebildet ist.

Weiterhin ist ein zweiter Ausgleichsraum zum Fliehkraftausgleich für einen zweiten zum Betätigen der anderen Kupplung über einen zweiten Druckraum hydraulisch betätigbaren Betätigungskolben vorgesehen, welcher durch einen Nabenzylinder und den zweiten Betätigungskolben gebildet ist.

Des weiteren vorgesehen, dass die Kupplungsglocke, der erste Betätigungskolben, ein Außenlamellenträgerflansch des Außenlamellenträgers, der zweite Betätigungskolben und der Nabenzylinder geschachtelt angeordnet sind.

Hierdurch wird das Verhältnis aus axialer Baulänge und radialem Bauraum des gesamten Kupplungssystems optimiert.

Besonders vorteilhaft ist es, wenn die Zughülse den Außenlamellenträger über seiner gesamten axialen Länge übergreift. Damit wird es möglich, die die Zughülse bewegende Betätigungseinrichtung radial innerhalb der Außenkontur der Zughülse anzuordnen. Der radiale Bauraum kann auf diese Weise klein gehalten werden.

Erfindungsgemäß ist weiter vorgesehen, dass die Zughülse form-und funktionskomplementär zur Außenkontur des Außenlamellenträgers, insbesondere kreiszylinderförmig, ausgebildet ist. Es ist lediglich sicherzustellen, dass ein ausreichender axialer Hub möglich ist, welcher ein Betätigen der entsprechenden Kupplung erlaubt. Auf diese Weise ist der benötigte radiale Bauraum auf das für die Funktionalität der Kupplung erforderliche Mindestmaß reduziert.

Es kann vorgesehen werden, dass die Zughülse (ebenso wie der Außenlamellenträger) im wesentlichen radial nach außen führende Öffnungen aufweist. Diese Maßnahme ermöglicht eine effiziente Kühlung der aneinander reibenden (Reib-)Lamellen, indem ein entsprechendes über die aneinander reibenden Flächen der Lamellen geführtes Fluid, z.B. Kühlflüssigkeit, effizient radial nach außen abgeführt werden kann.

Weiter ist erfindungsgemäß vorgesehen, dass die Zughülse an dem Außenlamellenträger axial verschieblich gelagert ist. Eine derartige Lagerung kann in einer oder mehreren Radiallagern bestehen, es können jedoch auch eine oder mehrere am Außenumfang des Außenlamellenträgers angebrachte einfache Führungshülsen sein. Damit ist zum einen ein reibungsarmes Aneinandergleiten der korrespondierenden Flächen der Zughülse und des Außenlamellenträgers gewährleistet, zum anderen werden die beiden Bauteile, Zughülse und Außenlamellenträger, radial fixiert. Beide Effekte tragen zu einer geringen Verschleißneigung bei.

Es ist erfindungsgemäß vorgesehen, dass die Zughülse beim Betätigen der einen Kupplung Zugkraft überträgt. Damit ist eine Anordnung der einzelnen Kupplungen der Doppelkupplung, wie sie in dem o.a. Dokument DE 198 33 376 A1 dargestellt sind möglich, nämlich eine solche bei dem sich die Einzelkupplungen einer gemeinsamen Rückenplatte bedienen und die axialen Betätigungskräfte der beiden Kupplungen gegeneinander, d.h. gegen die gemeinsame Rückenplatte nach innen gerichtet wirken.

Eine vorteilhafte Ausgestaltung dieser Variante sieht einen Zughülsendeckel vor, welcher wenigstens in Richtung der Drehachse anschlagbegrenzt ist, um Lamellen der einen Kupplung in Reibeingriff zu verbringen. Eine drehfeste oder gar starre Verbindung zwischen Zughülsendeckel und Zughülse ist nicht zwingend, wenngleich denkbar. Jedoch hat diese Ausführungsform mit (einseitiger oder beidseitiger) axialer Beanschlagung den Vorteil einer einfachen und damit kostengünstigen Herstellung sowie Montage.

Obigen Ausführungen ist zu entnehmen, dass sich diese Erfindung sowohl zum Einsatz bei Trockenkupplungen als auch bei nasslaufenden Lamellenkupplungen eignet.

Die zum Betätigen der Kupplung erforderliche Wirkverbindung zwischen dem ersten Betätigungskolben und der Zughülse kann ähnlich wie die zwischen Zughülse und Zughülsendeckel ausgeführt sein. So kann der erste Betätigungskolben wenigstens in eine Richtung der Drehachse -nämlich in die zum Betätigen der Kupplung kraftübertragende Richtung- lediglich anschlagbegrenzt sein, es kann jedoch auch eine beidseitige axiale Fixierung vorgesehen werden. Je nach Anwendungsfall ist es erforderlich, den Betätigungskolben und die Zughülse drehfest oder gar starr, z.B. einstückig, miteinander zu verbinden. Die mehrteilige einseitig anschlagbegrenzte Ausführung hat jedoch in der Regel Vorteile in Bezug auf die Komplexität der Bauteile (einfache Preßteile) als auch der Montage (einfaches Zusammenstecken).

Der radiale Bauraum lässt sich insbesondere dadurch klein halten, indem der erste Betätigungskolben axial benachbart zu der anderen der beiden Kupplungen angeordnet ist. Will man den axialen Bauraum möglichst gering halten, so bietet sich eine an die DE 198 33 376 A1 angenäherte Lösung an, bei der der Betätigungskolben radial innerhalb der Lamellenpakete der beiden Kupplungen angeordnet ist. Abweichend von dieser dort beschriebenen Ausführungsform ist jedoch zu bevorzugen, den ersten Betätigungskolben für die erste Kupplung auf der axial anderen Seite anzuordnen. Dies bedeutet für den Fall bei dem die erste Kupplung rechts von der zweiten Kupplung angeordnet ist, dass sich der Betätigungskolben der ersten Kupplung links vom Betätigungskolben der zweiten Kupplung befindet.

Einen axial minimierten Bauraum erhalt man demzufolge dann wenn man den ersten Betätigungskolben innerhalb dem Lamellenpaket der zweiten Kupplung und den zweiten Betätigungskolben innerhalb dem Lamellenpaket der ersten Kupplung anordnet.

Die Kupplungsglocke kann als Kupplungsglocke im herkömmlichen Sinn ausgestaltet sein, welche die gesamte Doppelkupplung gehäuseartig umgreift. Es ist jedoch auch möglich, dass diese lediglich als deckelartiges Flanschteil ausgeführt ist, wie nachfolgend in einem Ausführungsbeispiel noch eingehend erläutert wird.

Die Erfindung stellt ein mit definierter Anpresskraft erfolgendes Schalten der beiden Kupplungen der Doppelkupplung auch bei hohen Drehzahlen sicher.

Ein Kupplungssystem mit geringem Durchmesser erhält man dann, wenn die Kupplungsglocke den ersten Betätigungskolben topfartig übergreift, wenn gleichzeitig der erste Betätigungskolben den Außenlamellenträgerflansch topfartig übergreift, wenn wiederum gleichzeitig der Außenlamellenträgerflansch den zweiten Betätigungskolben topfartig übergreift und wenn schließlich gleichzeitig der zweite Betätigungskolben den Nabenzylinder topfartig übergreift.

Eine Optimierung auf möglichst kurze axiale Länge erhält man dann, wenn der Nabenzylinder den zweiten Betätigungskolben topfartig übergreift, wenn der zweite Betätigungskolben den Außenlamellenträgerflansch topfartig übergreift, wenn der Außenlamellenträgerflansch den ersten Betätigungskolben topfartig übergreift und wenn der erste Betätigungskolben die Kupplungsglocke topfartig übergreift.

Eine Optimierung der Doppelkupplung hinsichtlich minimierter parasitären Kräfte erhält man dann, wenn der erste Betätigungskolben und der zugehörige erste Druckraum im radialen Bereich zwischen der Außenkontur der Zughülse und der Außenkontur der Innenlamellenträger angeordnet sind. Auf diese Weise werden die (Axial-) Kräfte des ersten Betätigungskolbens direkt geführt, was insgesamt zu kleinen Verformungen an der Betätigungseinrichtung, insbesondere der Zughülse, dem Betätigungskolben und dem Zughülsendeckel führt.

Erfindungsgemäß ist weiter vorgesehen, dass dem ersten Betätigungskolben und/oder dem zweiten Betätigungskolben ein Rückstellelement, z.B. eine Tellerfeder zugeordnet ist bzw. sind. Mittels dieser Rückstellelemente werden die jeweiligen Betätigungskolben insbesondere im nicht hydraulikflüssigkeitsdruckbeaufschlagten Zustand in definierte Positionen verbracht.

Die Erfindung wird nunmehr anhand der Zeichnung näher beschrieben. Es zeigen:

Figur 1: ein erstes Ausführungsbeispiel einer erfindungsgemäßen Doppelkupplung im Axialhalbschnitt - Optimierung hinsichtlich kurzer Kraftwege, Antrieb von Außen -

Figur 2: ein zweites Ausführungsbeispiel einer erfindungsgemäßen Doppelkupplung im Axialhalbschnitt - Optimierung hinsichtlich kurzer Kraftwege, Antrieb von Außen, modifizierte Ölführung -

Figur 3: ein drittes Ausführungsbeispiel einer erfindungsgemäßen Doppelkupplung im Axialhalbschnitt - Optimierung hinsichtlich minimaler radialer Abmessungen, Antrieb von Außen -

Figur 4: ein viertes Ausführungsbeispiel einer erfindungsgemäßen Doppelkupplung im Axialhalbschnitt - Optimierung hinsichtlich minimaler axialer Abmessungen, Antrieb von Außen -

Figur 5: ein fünftes Ausführungsbeispiel einer erfindungsgemäßen Doppelkupplung im Axialhalbschnitt - Optimierung hinsichtlich minimaler radialer Abmessungen, Antrieb von Innen -

Figur 6: ein sechstes Ausführungsbeispiel einer erfindungsgemäßen Doppelkupplung im Axialhalbschnitt - Optimierung hinsichtlich minimaler axialer Abmessungen, Antrieb von Außen, modifizierte Ölführung -

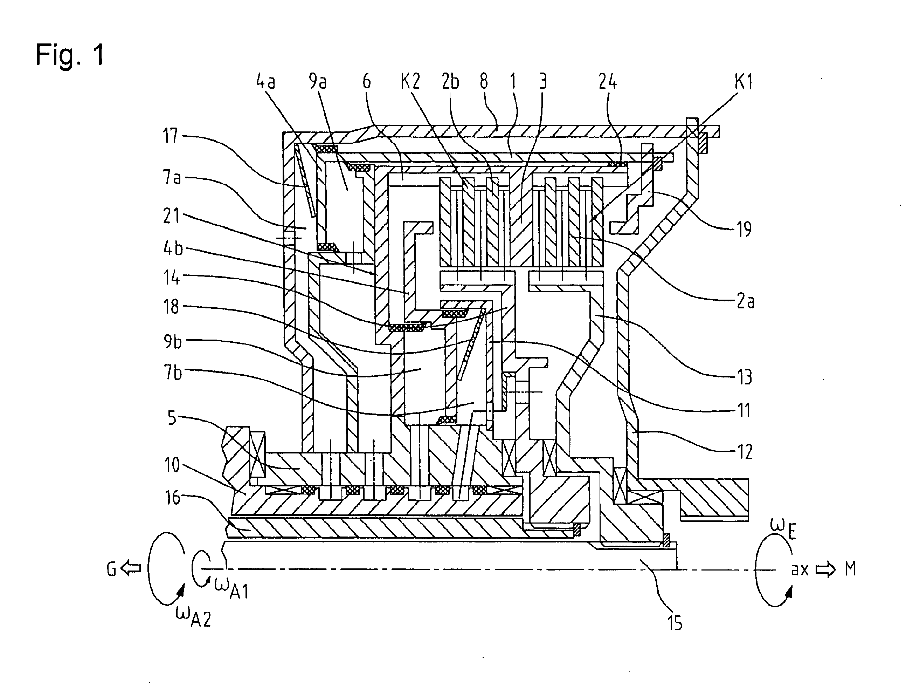

Die Figur 1 verdeutlicht anhand eines Ausschnittes aus einem beispielhaft gewählten Antriebsstrang für ein Kraftfahrzeug einen möglichen Grundaufbau und die Funktionsweise einer erfindungsgemäß gestalteten Doppelkupplung.

Auf der rechten Seite der Zeichnungsfigur kann über eine Steckverzahnung beispielsweise eine Kurbelwelle an einen Kupplungsglockenflansch 12 angeschlossen werden. Die Kurbelwelle ist beispielsweise mit einer Verbrennungskraftmaschine, einem Motor oder dergleichen gekoppelt. Diese Seite stellt die Antriebsseite des Antriebsstrangs dar.

Auf der linken Seite des Zeichnungsblattes sind zwei Getriebeeingangswellen, nämlich eine Zentraloder Vollwelle 15 und eine Hohlwelle 16 zu sehen, welche aus der Kupplungsglocke 8 der Doppelkupplung herausgeführt sind und beispielsweise mit einem hier nicht dargestellten Getriebe oder dergleichen gekoppelt sind. Diese Seite stellt die Abtriebsseite des Antriebsstrangs dar.

So kann beispielsweise die erste Getriebeeingangswelle (Zentral- oder Vollwelle 15) zum Betrieb aller ungeraden Gänge (z. B. 1, 3, 5 ...) und die zweite Getriebeeingangswelle (Hohlwelle 16) zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Vollwelle 15), als auch der zweiten Getriebeeingangswelle (Hohlwelle 16) des Getriebes zugeordnet sein.

Die Doppelkupplung selbst umfasst zwei Einzelkupplungen K1 und K2. Jede Kupplung K1, K2 umfasst jeweils einen Innenlamellenträger 13, 14. Beide Kupplungen K1, K2 teilen sich einen gemeinsamen Außenlamellenträger 6. Der Außenenlamellenträger der ersten Kupplung K1 wird nachfolgend als erster Außenlamellenträger 13, der Innenlamellenträger der zweiten Kupplung K2 wird im Folgenden als zweiter Innenlamellenträger 14 bezeichnet.

Der erste Innenlamellenträger 13 ist über eine Steckverzahnung mit der Vollwelle 15 drehfest verbunden. Der zweite Innenlamellenträger 14 ist über eine Steckverzahnung mit der Hohlwelle 16 verbunden. Der gemeinsame Außenlamellenträger 6 ist drehfest mit einer um eine drehfest angeordnete Kupplungsträger 10 drehbar gelagerte Kupplungsnabe 5 verbunden. Diese Kupplungsnabe 5 ist wiederum drehfest mit einer die beiden Kupplungen K1, K2 gehäuseartig umgreifenden Kupplungsglocke 8 verbunden, welche wiederum mittels einer Klauenverzahnung drehfest mit dem vorerwähnten Kupplungsglockenflansch 12 und damit mit dem Antrieb verbunden ist.

Die beiden Innenlamellenträger 13, 14 sind halbschalenförmig ausgebildet und axial nebeneinander angeordnet. Der Außenlamellenträger 6 weist eine im Wesentlichen zylinderförmige Gestalt auf und erstreckt sich über die axial verlaufenden Bereiche der Halbschalen 13, 14.

Die beiden Innenlamellenträger 13, 14 weisen Außenverzahnungen auf, welche zur axial verschieblichen aber im Wesentlichen drehfesten Führung von im vorliegenden Fall jeweils drei entsprechende Innenverzahnungen aufweisenden Reiblamellen dienen. Letztere werden üblicherweise auch als Innenlamellen bezeichnet.

In entsprechender Weise sind am Innenumfang der den jeweiligen Innenlamellenträgern 13, 14 zugeordneten Außenlamellenträgerabschnitten des gemeinsamen Außenlamellenträgers 6 Innenverzahnungen angeordnet, in denen Außenverzahnungen aufweisende Stahllamellen, die sogenannten Außenlamellen, axial verschieblich aber drehfest geführt sind. Die beiden Außenlamellenträgerabschnitte werden durch eine gemeinsame Rückenplatte 3 voneinander getrennt.

An den beiden äußeren Enden des gemeinsamen Außenlamellenträgers 6 sind jeweils Druckplatten in gleicher Weise wie die vorstehend genannten Außenlamellen axial verschieblich aber im Wesentlichen drehfest geführt.

Die äußeren Stahllamellen/Außenlamellen, die inneren Reiblamellen/Innenlamellen sowie die beiden Druckplatten und die gemeinsame Rückenplatte greifen wechselseitig verzahnungsartig in an sich bekannter Weise jeweils ein einer Kupplung K1, K2 zugeordnetes Lamellenpaket bildend ineinander.

Die beiden Lamellenpakete mit den entsprechenden Stahl-/Reiblamellen sind somit auf dem gemeinsamen Außenlamellenträger 6 in axialer Richtung hintereinanderliegend angeordnet. Im vorliegenden Ausführungsbeispiel sind die Reibflächen aller Reiblamellen im Wesentlichen gleich groß, sodass die einzelnen Kupplungen K1, K2 eine gleichwertige Leistungsfähigkeit aufweisen. Selbstverständlich ist es auch möglich, dass die Reibflächen der Reiblamellen verschieden große Durchmesser aufweisen.

Jeder Kupplung K1, K2 ist ein hydraulisch betätigbarer Betätigungskolben 4a, 4b zugeordnet. Jeder dieser Betätigungskolben 4a, 4b ist zur Erzeugung von die jeweiligen Kupplungen K1, K2 betätigenden Betätigungskräften vorgesehen. Das bedeutet, dass ausgehend von dem jeweiligen krafterzeugenden Betätigungskolben 4a, 4b entsprechende Druckelemente gegen die korrespondierende der beiden Druckplatten gedrückt werden, welche die jeweiligen zugeordneten Lamellenpakete gegen die gemeinsame Rückenplatte Reibschluss zwischen den benachbarten Stahl-/Reiblamellen erzeugend drücken.

Vorliegend werden die beiden Kupplungen K1, K2 nach innen gerichtet betätigt, wobei die Reaktionskräfte gegen die gemeinsame Rückenplatte 3 wirken.

Hauptmerkmal der Erfindung ist eine den Außenlamellenträger 6 außen umgreifende Zughülse 1, welche Zugkräfte überträgt und das "außen" liegende Lamellenpaket 2a zum Einkuppeln zusammenpresst. Die Lamellenpakete 2a, 2b sind so angeordnet, dass sie eine gemeinsame Rückenplatte 3 benutzen können. Die axialen Betätigungskräfte wirken gegeneinander und stützen sich gegen die gemeinsame Rückenplatte ab 3.

Die Anordnung nach Figur 1 ist besonders **dadurch gekennzeichnet**, dass der Betätigungskolben 4a für die Kupplung K1 radial außen angeordnet ist und somit die Kräfte des Betätigungskolbens 4a sehr direkt geführt werden, was zu insgesamt kleinen Verformungen an der Betätigungseinrichtung führt.

Dieser Kolben 4a hat einen Fliehkraftausgleich durch einen Ausgleichsraum 7a, der gebildet wird durch die Kupplungsglocke 8 und den Betätigungskolben 4a selbst.

Die zweite Kupplung K2 wird durch den zweiten Betätigungskolben 4b betätigt, der seinerseits einen Fliehkraftausgleich besitzt. Der benötigte Ausgleichsraum 7b wird gebildet durch den Kolben 4b und einen Nabenzylinder 11.

Die in Figur 1 dargestellte Doppelkupplung wird angetrieben motorseitig über den Kupplungsglockenflansch 12. Der Abtrieb auf die Getriebewellen 15 und 16 erfolgt über die Innenlamellenträger 13 und 14. Beide Kupplungen K1, K2 besitzen Rückstellelemente 17, 18, die hier beispielsweise als Tellerfedern ausgebildet sind.

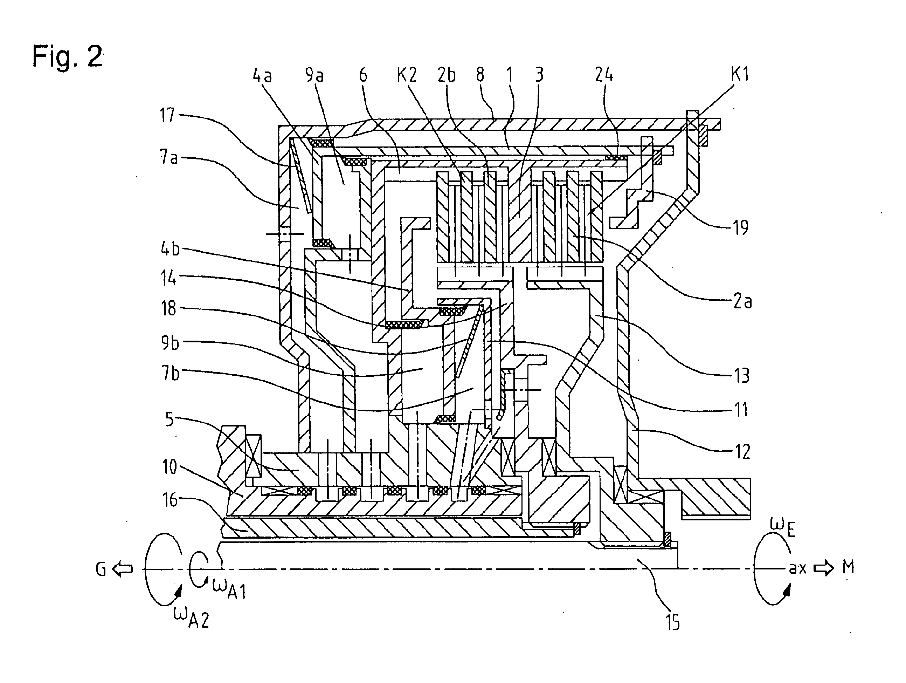

Figur 2 zeigt eine zweite Ausführungsvariante einer erfindungsgemäßen Doppelkupplung. Diese Doppelkupplung weist die wesentlichen Bestandteile identisch mit der Doppelkupplung gemäß der Figur 1 auf. Um eine Bezugnahme zu erleichtern sind identische Bauteile mit denselben Bezugszeichen versehen.

Die in Figur 2 dargestellte Ausführungsvariante unterscheidet sich von der gemäß der Figur 1 lediglich durch eine geänderte Kühlmittelführung innerhalb der Kupplungseinrichtung. Insbesondere wird bei dieser Ausführungsvariante eine verbesserte Kühlmittelversorgung der ersten Kupplung K1 sichergestellt.

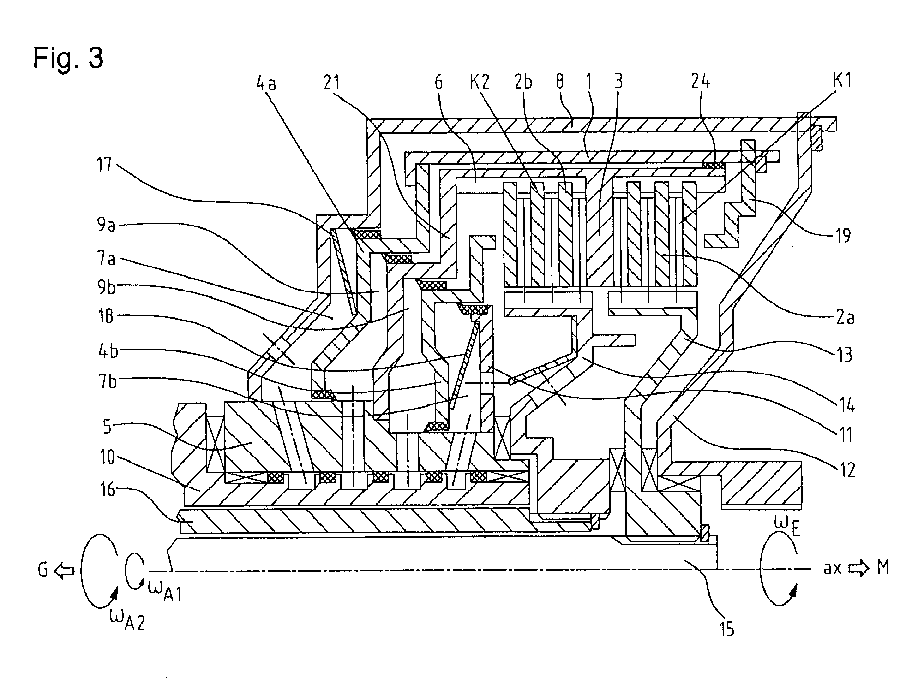

Eine dritte Variante einer erfindungsgemäßen Doppelkupplung ist in der Figur 3 gezeigt. Auch diese Doppelkupplung weist die wesentlichen Bestandteile identisch mit der Doppelkupplung gemäß der Figur 1 auf. Um eine Bezugnahme zu erleichtern sind identische Bauteile mit denselben Bezugszeichen versehen.

Hier wird besonderes Augenmerk darauf gerichtet, dass das Kupplungssystem einen möglichst kleinen Durchmesser aufweist. Da bei gegebenem Systemdruck die Kolben 4a, 4b nicht beliebig klein sein können, werden sie hier axial hintereinander gestaffelt, wobei der Flansch 21 des Außenlamellenträgers 8 zwischen den beiden Druckräumen 9a, 9b zu liegen kommt. Um ein Taumeln der Zughülse 1 zu vermeiden, ist diese am äußeren Ende mit einem geeigneten (Gleit-)Lagerelement 24 gegen den Außenlamellenträger 6 abgestützt.

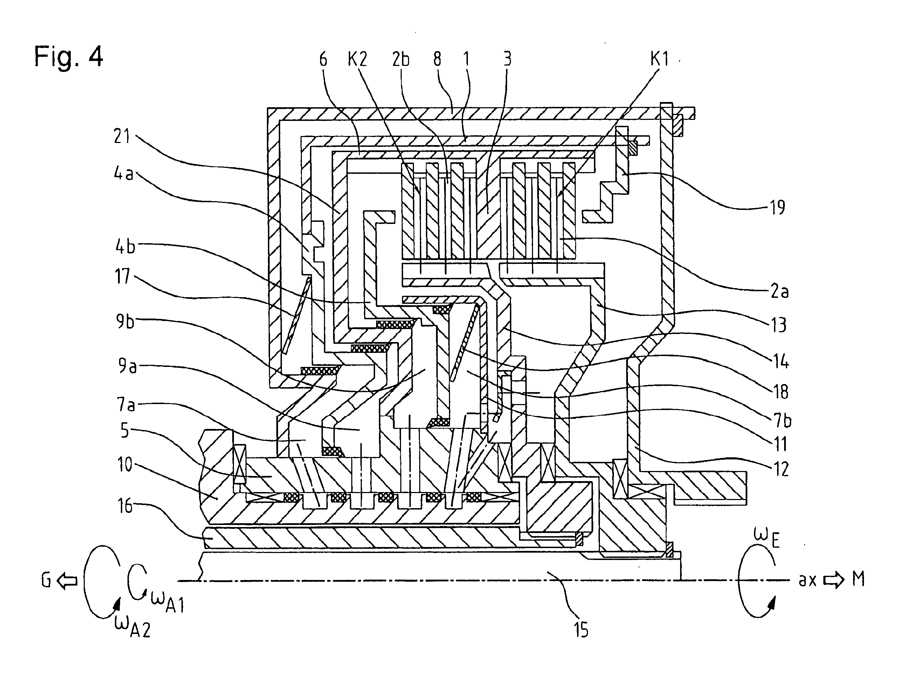

Figur 4 stellt eine weitere Variante dar, bei der die Komponenten der hydraulischen Betätigung im Hinblick auf eine möglichst kurze axiale Baulänge optimiert wurden. Auch diese Doppelkupplung weist die wesentlichen Bestandteile identisch mit der Doppelkupplung gemäß der Figur 1 auf. Um eine Bezugnahme zu erleichtern sind identische Bauteile mit denselben Bezugszeichen versehen.

Die Kolben 4a, 4b werden zur Reduzierung des axialen Bauraums innerhalb des Innenlamellenträgers 14 geschachtelt angeordnet.

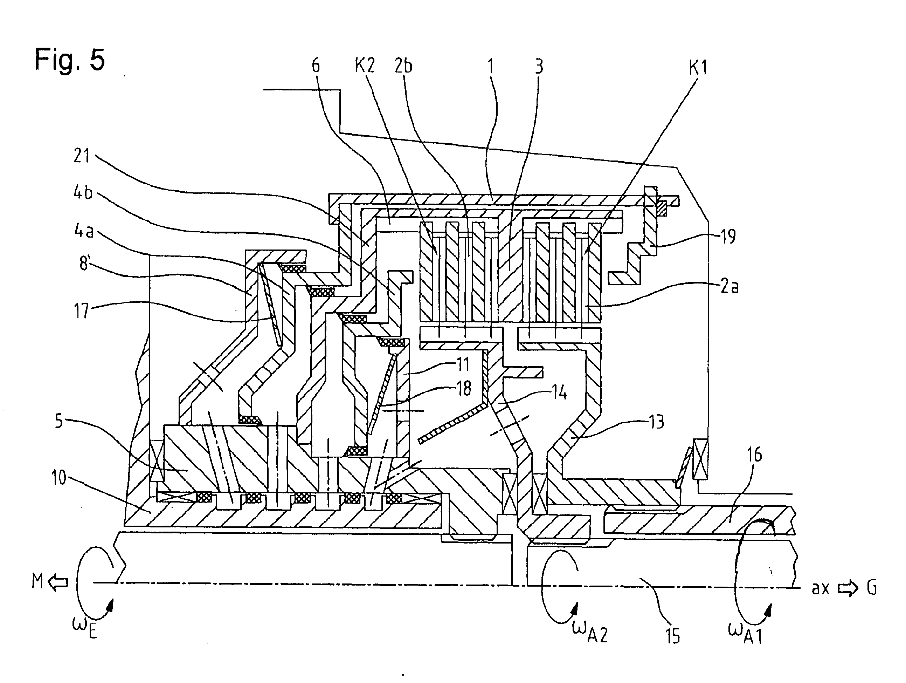

Eine weitere Variante stellt Figur 5 dar. Auch diese Doppelkupplung weist die wesentlichen Bestandteile identisch mit der Doppelkupplung gemäß der Figur 1 auf. Um eine Bezugnahme zu erleichtern sind identische Bauteile mit denselben Bezugszeichen versehen.

Diese Variante ist eine Abwandlung der Variante aus Figur 3, wobei der Antrieb von innen heraus erfolgt. Da hierbei keine radial geschachtelten Hohlwellen innerhalb der Öleinführung erforderlich sind, kann diese Ausführung prinzipiell mit besonders kleinem Systemdurchmesser ausgeführt werden.

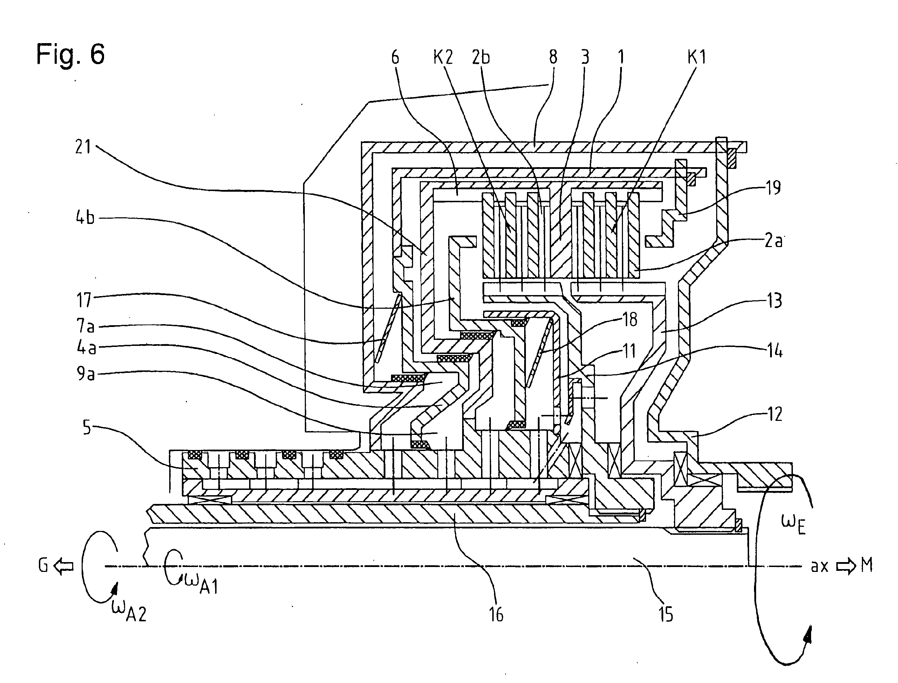

Die dargestellten Ausführungen betreffen bisher den sogenannten "stehenden Support", bei der die Öleinführung über ein mit dem Getriebegehäuse verbundenen Kupplungsträger 10 ("Support") erfolgt. Es ist natürlich auch möglich, diese Kupplung mit "drehender Öleinführung" zu gestalten. Dies wird in Figur 6 skizziert. Auch diese Doppelkupplung weist die wesentlichen Bestandteile identisch mit der Doppelkupplung gemäß der Figur 1 auf. Um eine Bezugnahme zu erleichtern sind identische Bauteile mit denselben Bezugszeichen versehen.

Alle vorstehend beschriebenen Ausführungsvarianten zeichnen sich durch folgende Vorteile aus:

Drehzahlfestigkeit: Die Umfangsspannungen aufgrund der Eigenmasse einer dünnen Hülse hängen quadratisch ab von Radius und Drehzahl gemäß der Formel

$$\sigma = \rho \cdot r^2 \cdot \omega^2$$

wobei ρ für die Dichte des Werkstoffs steht, r für den mittleren Radius und ω für die Winkelgeschwindigkeit. Bei einer Doppelkupplung treten die höchsten Drehzahlen an den Abtriebswellen auf, welche Drehzahlen erreichen können, die über der Motordrehzahl liegen. Die innen abtreibende Doppelkupplung hat den Vorteil, dass diese hohen Drehzahlen an den vom Durchmesser her kleineren Innenlamellenträgern auftreten. Entsprechend der obigen Gleichung lassen sich mit einem Bauteil von kleinerem Radius entsprechend höhere Drehzahlen fahren, wenn im Übrigen die Bauart des Lamellenträgers gleich bleibt.

Die "Zughülse" kann als Blechteil mit geringer Wandstärke ausgeführt sein, da lediglich Zugspannungen wirken aus der Zugkraft selbst sowie der überlagerten Umfangsspannung aufgrund von Fliehkrafteinflüssen.

Kleiner Durchmesser: Die Doppelkupplung kann mit relativ kleinem Durchmesser gebaut werden, da die Betätigungsvorrichtungen auf einer Seite angeordnet werden können und alleine die Lamellendurchmesser Durchmesser bestimmend sind (vgl. Figur 3).

Kurze Baulänge: Es ist andererseits aber auch möglich, dieses Konzept im Hinblick auf kurze Baulänge zu optimieren, wobei sich die Betätigungsvorrichtungen dabei - zumindest teilweise - radial innerhalb der Lamellen befinden. Die andere Betätigungsvorrichtung kann hierbei auch außen etwa auf dem Radius der Lamellen vorgesehen werden (Figur 1, Figur 4).

Bezugszeichenliste

| 1 | Zughülse |
|---|---|
| 2a | Lamellenpaket |
| 2b | Lamellenpaket |
| 3 | gemeinsame Rückenplatte |
| 4a | Betätigungskolben |
| 4b | Betätigungskolben |
| 5 | Kupplungsnabe |
| 6 | Außenlamellenträger |
| 7a | Ausgleichsraum |
| 7b | Ausgleichsraum |
| 8 | Kupplungsglocke |
| 8' | Kupplungsglockenflanschteil |
| 9a | Druckraum |
| 9b | Druckraum |
| 10 | Kupplungsträger |
| 11 | Nabenzylinder |
| 12 | Kupplungsglockenflansch |
| 13 | Innenlamellenträger |
| 14 | Innenlamellenträger |
| 15 | erste Getriebeeingangswelle |
| 16 | zweite Getriebeeingangswelle |
| 17 | Rückstellelement (Tellerfeder) |
| 18 | Rückstellelement (Tellerfeder) |
| 19 | Zughülsendeckel |
| 21 | Außenlamellenträgerflansch |
| 24 | Lagerelement |
| K1 | Kupplung |
| K2 | Kupplung |
| r | Radius |
| ax | Drehachse |
| ω | Winkelgeschwindigkeit |
| $\omega_E$ | Eingangswinkelgeschwindigkeit (Motor) |
| $\omega_{A1}$ | Ausgangswinkelgeschwindigkeit (erste Getriebeeingangswelle) |
| $\omega_{A2}$ | Ausgangswinkelgeschwindigkeit (zweite Getriebeeingangswelle) |
| σ | Umfangsspannung |
| ρ | Werkstoffdichte |
| M | Motor |
| G | Getriebe |

**Patentansprüche**

1. Doppelkupplung für ein Getriebe mit zwei Getriebeeingangswellen (15, 16)

    - mit zwei um eine gemeinsame Drehachse (ax) drehbare und axial hintereinander angeordneten Kupplungen (K1, K2), welche
    - einen gemeinsamen angetriebenen Außenlamellenträger (6) und jeweils einen abtreibenden Innenlamellenträger (13, 14) aufweisen, wobei
    - eine den Außenlamellenträger (6) umgreifende Zughülse (1) vorgesehen ist, über die eine der beiden Kupplungen (K1) betätigbar ist,
    - zum Betätigen der einen Kupplung (K1) ein erster über einen ersten Druckraum (9a) hydraulisch betätigbarer Betätigungskolben (4a) vorgesehen ist,
    - ein erster Ausgleichsraum (7a) zum Fliehkraftausgleich für den ersten Betätigungskolben (4a) vorgesehen ist, welcher durch eine angetriebene Kupplungsglocke (8, 8') und den ersten Betätigungskolben (4a) gebildet ist,

    **dadurch gekennzeichnet, dass** ein zweiter Ausgleichsraum (7b) zum Fliehkraftausgleich für einen zweiten zum Betätigen der anderen Kupplung (K29 über einen zweiten Druckraum (9b) hydraulisch betätigbaren Betätigungskolben (4b) vorgesehen ist, welcher durch einen Nabenzylinder (11) und den zweiten Betätigungskolben (4b) gebildet ist, und dass die Kupplungsglocke (8, 8'), der erste Betätigungskolben (4a), ein Außenlamellenträgerflansch (21) des Außenlamellenträgers (6), der zweite Betätigungskolben (4b) und der Nabenzylinder (11) geschachtelt angeordnet sind.

2. Doppelkupplung nach Anspruch 1,
   **dadurch gekennzeichnet, dass** die Zughülse (1) den Außenlamellenträger (6) über seiner gesamten axialen Länge übergreift.

3. Doppelkupplung nach Anspruch 1 oder 2,
   **dadurch gekennzeichnet, dass** die Zughülse (1) form- und funktionskomplementär zur Außenkontur des Außenlamellenträgers (6), insbesondere kreiszylinderförmig, ausgebildet ist.

4. Doppelkupplung nach einem der vorangegangenen Ansprüche,
   **dadurch gekennzeichnet, dass** die Zughülse (1) im wesentlichen radial nach außen führende Öffnungen aufweist.

5. Doppelkupplung nach einem der vorangegangenen Ansprüche,
   **dadurch gekennzeichnet, dass** die Zughülse (1) an dem Außenlamellenträger (6) axial verschieblich gelagert ist.

6. Doppelkupplung nach einem der vorangegangenen Ansprüche,
   **dadurch gekennzeichnet, dass** die Zughülse (1) beim Betätigen der einen Kupplung (K1) Zugkraft überträgt.

7. Doppelkupplung nach Anspruch 6,
   **dadurch gekennzeichnet, dass** ein Zughülsendeckel (19) vorgesehen ist, welcher wenigstens in Richtung der Drehachse (ax) anschlagbegrenzt ist, um Lamellen der einen Kupplung (K1) in Reibeingriff zu verbringen.

8. Doppelkupplung nach einem der vorangehenden Ansprüche ,
   **dadurch gekennzeichnet, dass** der erste Betätigungskolben (4a) wenigstens in eine Richtung der Drehachse (ax) anschlagbegrenzt, vorzugsweise drehfest, z.B. einstückig, mit der Zughülse (1) verbunden ist.

9. Doppelkupplung nach einem der vorangehenden Ansprüche,
   **dadurch gekennzeichnet, dass** der erste Betätigungskolben (4a) axial benachbart zu der anderen der beiden Kupplungen (K2) angeordnet ist.

10. Doppelkupplung nach einem der vorangehenden Ansprüche,
    **dadurch gekennzeichnet, dass** die Kupplungsglocke (8, 8') den ersten Betätigungskolben (4a) topfartig übergreift, dass der erste Betätigungskolben (4a) den Außenlamellenträgerflansch (21) topfartig übergreift, dass der Außenlamellenträgerflansch (21) den zweiten Betätigungskolben (4b) topfartig übergreift und dass der zweite Betätigungskolben (4b) den Nabenzylinder (11) topfartig übergreift.

11. Doppelkupplung nach einem der vorangehenden Ansprüche,
    **dadurch gekennzeichnet, dass** der Nabenzylinder (11) den zweiten Betätigungskolben (4b) topfartig übergreift, dass der zweite Betätigungskolben (4b) den Außenlamellenträgerflansch (21) topfartig übergreift, dass der Außenlamellenträgerflansch (21) den ersten Betätigungskolben (4a) topfartig übergreift und dass der erste Betätigungskolben (4a) die Kupplungsglocke (8, 8') topfartig übergreift.

12. Doppelkupplung nach einem der vorangehenden Ansprüche,
    **dadurch gekennzeichnet , dass** der erste Betätigungskolben (4a) und der zugehörige erste Druckraum (9a) im radialen Bereich zwischen der Außenkontur der Zughülse (1) und der Außenkontur der Innenlamellenträger (11, 13) angeordnet sind.

13. Doppelkupplung nach einem der vorangehenden Ansprüche,
    **dadurch gekennzeichnet, dass** dem ersten Betätigungskolben (4a) und/oder dem zweiten Betätigungskolben (4b) ein Rückstellelement, z.B. eine Tellerfeder (17, 18) zugeordnet ist bzw. sind.

**Claims**

1. Dual clutch for a transmission having two transmission input shafts (15, 16),

   - having two clutches (K1, K2) which are rotatable about a common rotational axis (ax) and which are arranged axially in series and which
   - have a common driven outer plate carrier (6) and in each case one driving inner plate carrier (13, 14), with
   - a traction sleeve (1) which engages around the outer plate carrier (6) being provided, by means of which traction sleeve (1) the one of the two clutches (K1) can be actuated,
   - a first actuating piston (4a), which can be hydraulically actuated by means of a first pressure space (9a), being provided for actuating the one clutch (K1),

- a first compensating space (7a) for centrifugal force compensation being provided for the first actuating piston (4a), which first compensating space (7a) is formed by a driven clutch bell (8, 8') and the first actuating piston (4a),

**characterized in that** a second compensating space (7b) for centrifugal force compensation for a second actuating piston (4b) which can be hydraulically actuated by means of a second pressure space (9b) in order to actuate the other clutch (K2) is provided, which second compensating space (7b) is formed by a hub cylinder (11) and the second actuating piston (4b), and **in that** the clutch bell (8, 8'), the first actuating piston (4a), an outer plate carrier flange (21) of the outer plate carrier (6), the second actuating piston (4b) and the hub cylinder (11) are arranged in a nested fashion.

2. Dual clutch according to Claim 1,
**characterized in that**
the traction sleeve (1) engages over the outer plate carrier (6) over its entire axial length.

3. Dual clutch according to Claim 1 or 2,
**characterized in that**
the traction sleeve (1) is of complementary design, in terms of shape and function, to the outer contour of the outer plate carrier (6), and is in particular of round cylindrical design.

4. Dual clutch according to one of the preceding claims, **characterized in that** the traction sleeve (1) has openings which lead substantially radially outwards.

5. Dual clutch according to one of the preceding claims, **characterized in that** the traction sleeve (1) is mounted in an axially movable manner on the outer plate carrier (6).

6. Dual clutch according to one of the preceding claims, **characterized in that** the traction sleeve (1) transmits a tensile force during the actuation of the one clutch (K1).

7. Dual clutch according to Claim 6,
**characterized in that** a traction sleeve cover (19) is provided, which traction sleeve cover (19) is stop-limited at least in the direction of the rotational axis (ax) in order to place plates of the one clutch (K1) into frictional engagement.

8. Dual clutch according to one of the preceding claims, **characterized in that** the first actuating piston (4a) is connected to the traction sleeve (1) in a stop-limited manner at least in one direction of the rotational axis (ax), preferably in a rotationally fixed manner, for example in one piece.

9. Dual clutch according to one of the preceding claims, **characterized in that** the first actuating piston (4a) is arranged axially adjacent to the other of the two clutches (K2).

10. Dual clutch according to one of the preceding claims, **characterized in that** the clutch bell (B, 8') engages over the first actuating piston (4a) in the manner of a pot, **in that** the first actuating piston (4a) engages over the outer plate carrier flange (21) in the manner of a pot, **in that** the outer plate carrier flange (21) engages over the second actuating piston (4b) in the manner of a pot, and **in that** the second actuating piston engages over the hub cylinder (11) in the manner of a pot.

11. Dual clutch according to one of the preceding claims, **characterized in that** the hub cylinder (11) engages over the second actuating piston (4b) in the manner of a pot, **in that** the second actuating piston (4b) engages over the outer plate carrier flange (21) in the manner of a pot, **in that** the outer plate carrier flange (21) engages over the first actuating piston (4a) in the manner of a pot, and **in that** the first actuating piston (4a) engages over the clutch bell (8, 8') in the manner of a pot.

12. Dual clutch according to one of the preceding claims, **characterized in that** the first actuating piston (4a) and the associated first pressure space (9a) are arranged in the radial region between the outer contour of the traction sleeve (1) and the outer contour of the inner plate carrier (11, 13).

13. Dual clutch according to one of the preceding claims, **characterized in that** the first actuating piston (4a) and/or the second actuating piston (4b) are or is assigned a restoring element, for example a plate spring (17, 18).

**Revendications**

1. Double embrayage pour une boîte de vitesses comprenant deux arbres d'entrée de boite de vitesses (15, 16),

- avec deux embrayages (K1, K2) disposés axialement l'un derrière l'autre et pouvant tourner autour d'un axe de rotation commun (ax) qui présentent
- un porte-disques extérieur commun entraîné (6) et à chaque fois un porte-disques intérieur d'entraînement de sortie (13, 14),
- une douille de traction (1) venant en prise autour du porte-disques extérieur (6) étant prévue, laquelle permet d'actionner l'un des deux embrayages (K1),

- pour l'actionnement d'un embrayage (K1), un premier piston d'actionnement (4a) pouvant être actionné hydrauliquement par le biais d'une première chambre de pression (9a) étant prévu,
- une première chambre de compensation (7a) pour la compensation de la force centrifuge pour le premier piston d'actionnement (4a) étant prévue, laquelle est formée par une cloche d'embrayage (8, 8') entraînée et le premier piston d'actionnement (4a),

**caractérisé en ce**

**qu'**une deuxième chambre de compensation (7b) est prévue pour la compensation de la force centrifuge pour un deuxième piston d'actionnement (4b) pouvant être actionné hydrauliquement pour l'actionnement de l'autre embrayage (K2) par le biais d'une deuxième chambre de pression (9b), laquelle est formée par un cylindre de moyeu (11) et le deuxième piston d'actionnement (4b), et en ce que la cloche d'embrayage (8, 8'), le premier piston d'actionnement (4a), une bride du porte-disques extérieur (21) du porte-disques extérieur (6), le deuxième piston d'actionnement (4b) et le cylindre de moyeu (11) sont disposés de manière emboîtée.

2. Double embrayage selon la revendication 1,
**caractérisé en ce que**
la douille de traction (1) vient en prise par le dessus avec le porte-disques extérieur (6) sur toute sa longueur axiale.

3. Double embrayage selon la revendication 1 ou 2,
**caractérisé en ce que**
la douille de traction (1) est réalisée de manière complémentaire de par sa forme et sa fonction avec le contour extérieur du porte-disques extérieur (6), notamment présente une forme cylindrique circulaire.

4. Double embrayage selon l'une quelconque des revendications précédentes,
**caractérisé en ce que**
la douille de traction (1) présente des ouvertures conduisant essentiellement radialement vers l'extérieur.

5. Double embrayage selon l'une quelconque des revendications précédentes,
**caractérisé en ce que**
la douille de traction (1) est montée de manière déplaçable axialement sur le porte-disques extérieur (6).

6. Double embrayage selon l'une quelconque des revendications précédentes,
**caractérisé en ce que**
la douille de traction (1) transmet la force de traction lors de l'actionnement d'un embrayage (K1).

7. Double embrayage selon la revendication 6,
**caractérisé en ce que**
l'on prévoit un couvercle de douille de traction (19) qui est limité par une butée au moins dans la direction de l'axe de rotation (ax), afin d'amener les disques d'un embrayage (K1) en engagement de frottement.

8. Double embrayage selon l'une quelconque des revendications précédentes,
**caractérisé en ce que**
le premier piston d'actionnement (4a) est connecté à la douille de traction (1) au moins dans une direction de l'axe de rotation (ax) de manière limitée par une butée, de préférence solidaire en rotation, par exemple d'une seule pièce.

9. Double embrayage selon l'une quelconque des revendications précédentes,
**caractérisé en ce que**
le premier piston d'actionnement (4a) est disposé axialement à proximité de l'autre des deux embrayages (K2).

10. Double embrayage selon l'une quelconque des revendications précédentes,
**caractérisé en ce que**
la cloche d'embrayage (8, 8') vient en prise à la manière d'un pot par-dessus le premier piston d'actionnement (4a), **en ce que** le premier piston d'actionnement (4a) vient en prise à la manière d'un pot par-dessus la bride du porte-disques extérieur (21), **en ce que** la bride du porte-disques extérieur (21) vient en prise à la manière d'un pot par-dessus le deuxième piston d'actionnement (4b), et **en ce que** le deuxième piston d'actionnement (4b) vient en prise à la manière d'un pot par-dessus le cylindre de moyeu (11).

11. Double embrayage selon l'une quelconque des revendications précédentes,
**caractérisé en ce que**
le cylindre de moyeu (11) vient en prise à la manière d'un pot par-dessus le deuxième piston d'actionnement (4b), **en ce que** le deuxième piston d'actionnement (4b) vient en prise à la manière d'un pot par-dessus la bride du porte-disques extérieur (21), **en ce que** la bride du porte-disques extérieur (21) vient en prise à la manière d'un pot par-dessus le premier piston d'actionnement (4a) et **en ce que** le premier piston d'actionnement (4a) vient en prise à la manière d'un pot par-dessus la cloche d'embrayage (8, 8').

12. Double embrayage selon l'une quelconque des revendications précédentes,
**caractérisé en ce que**
le premier piston d'actionnement (4a) et la première chambre de pression associée (9a) sont disposés dans la région radiale entre le contour extérieur de la douille de traction (1) et le contour extérieur du porte-disques intérieur (11, 13).

**13.** Double embrayage selon l'une quelconque des revendications précédentes,
**caractérisé en ce que**
l'on associe au premier piston d'actionnement (4a) et/ou au deuxième piston d'actionnement (4b) un élément de rappel, par exemple un ressort Belleville (17, 18).

Fig. 1

# Fig. 2

EP 1 568 906 B1

Fig. 3

Fig. 4

# Fig. 5

EP 1 568 906 B1

# Fig. 6

EP 1 568 906 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1195537 B1
- DE 19833376 A1
- DE 10146606 A1
- DE 19833378 A1
- US 4966270 A
- FR 2814516 A1
- DE 10131816 A1
- US 5865289 A